# EUROPEAN PATENT APPLICATION

(11) **EP 3 131 328 A1**
(43) Date of publication of application: **15.02.2017**
(21) Application number: 15777230.2
(22) Date of filing: 07.04.2015
(51) Int. Cl.: H04W 24/00, H04W 24/10

(54) **METHOD AND APPARATUS FOR TRACKING UPLINK BEAM IN BEAMFORMING-BASED CELLULAR SYSTEM**

(30) Priority: 07.04.2014 KR 20140041026
(71) Applicant: Samsung Electronics Co., Ltd., Gyeonggi-do 16677 (KR)
(72) Inventor: YOO, Hyun-Il, Suwon-si Gyeonggi-do 443-280 (KR)
(74) Representative: HGF Limited
(86) International application number: PCT/KR2015/003463
(87) International publication number: WO 2015/156575

(57) **Abstract**

A method and an apparatus for tracking an uplink beam in a beamforming-based cellular system are disclosed. A method for a terminal comprises the steps of: transmitting, to a serving base station, a measurement report containing signal qualities of the serving base station and neighboring base stations; receiving, from the serving base station, uplink beam tracking information of at least one beam tracking target base station; transmitting an uplink beam training signal for the beam tracking target base station, on the basis of the uplink beam tracking information; and receiving, from the serving base station, information on an optimum terminal transmission beam of the beam tracking target base station, and storing the received information.

## Description

### Technical Field

The present disclosure relates to a method and apparatus for tracking an uplink beam for efficient handover in a beamforming-based cellular system.

### Background Art

To satisfy demands for wireless data traffic, which have been increasing since commercialization of a 4^{th} generation (4G) communication system, efforts have been made to develop a 5^{th} generation (5G) or pre-5G communication system. That is why the 5G or pre-5G communication system is called a beyond 4G network communication system or a post long term evolution (LTE) system.

To achieve high data rates, deployment of the 5G communication system in a millimeter wave (mmWave) band (for example, a 60-GHz band) is under consideration. In order to mitigate propagation path loss and increase a propagation distance in the mmWave band, beamforming, massive multiple input multiple output (MIMO), full dimensional MIMO (FD-MIMO), array antenna, analog beamforming, and large-scale antenna technology have been discussed for the 5G communication system.

Further, to improve a system network, techniques such as evolved small cell, advanced small cell, cloud radio access network (RAN), ultra-dense network, device to device (D2D) communication, wireless backhaul, moving network, cooperative communication, coordinated multi-point (CoMP), and interference cancelation have been developed for the 5G communication system.

Besides, advanced coding modulation (ACM) techniques such as hybrid FSK and QAM modulation (FQAM) and sliding window superposition coding (SWSC), and advanced access techniques such as filter bank multi carrier (FBMC) and non-orthogonal multiple access (NOMA), and sparse code multiple access (SCMA) have been developed for the 5G communication system.

Along with the dramatic development of wireless communication technology, users' requirements have also been increased. As users demand higher-capacity, higher-quality data transmission and reception, multi-antenna techniques have attracted much attention. To achieve a large gain for a specific direction or channel using multiple antennas, a specific gain is multiplied by the response of each antenna. This is called beamforming. A base station (BS) may transmit a signal directed to a user by a beam allocated to the user. In multi-beam technology, a mobile station (MS) or a BS generates a plurality of beams in a plurality of directions or channels. The BS may transmit signals directed to one or more users by at least one beam allocated to the users.

Beamforming offers the benefits of signal transmission/reception power increased by as much as a beam gain, reduction of signal interference due to use of narrow beams, and the resulting increased communication performance. Each of a BS and a UE may generate one or more beams, and all beams may be generated at the same time or one by one through one array antenna. To maintain an optimal communication performance, the BS and the UE search for a beam pair that offers the best reception signal quality among (Nb x Nm) downlink and uplink beam pairs. However, it takes a long time to detect the best beam pair because of the physical constraint that the MS is not capable of measuring the received signal qualities of a plurality of beam pairs at one time. This time delay may cause communication interruptions while the MS is searching for a new beam pair for a neighboring cell, when a handover event occurs along with movement of the MS from a serving cell to the neighboring cell.

### Disclosure

### Technical Problem

An object of the present disclosure is to provide a method and apparatus for transmitting and receiving information in a communication system.

Another object of the present disclosure is to provide a method and apparatus for tracking an uplink beam of a mobile station (MS), for efficient handover in a mobile communication system using beamforming based on multiple antennas.

Another object of the present disclosure is to provide a method and apparatus for enabling a target base station (BS) to track an uplink beam of an MS in a beamforming-based cellular system.

Another object of the present disclosure is to provide a method and apparatus for transmitting, to a target BS, information required for tracking an uplink beam of an MS by a serving BS in a beamforming-based cellular system.

### Technical Solution

In an aspect of the present invention, a method for tracking an uplink beam in a beamforming-based cellular system includes transmitting, to a serving base station (BS), a measurement report including signal qualities of the serving BS and neighboring BSs, receiving, from the serving BS, uplink beam tracking information about at least one beam tracking target BS, transmitting an uplink beam training signal for the at least one beam tracking target BS based on the uplink beam tracking information, and receiving, from the serving BS, information about a best mobile station (MS) transmission beam of the beam tracking target BS, and storing the received information.

In another aspect of the present invention, a method for tracking an uplink beam in a beamforming-based cellular system includes receiving, from an MS, a measurement report including signal qualities of a serving BS and neighboring BSs, determining one or more beam tracking candidate BSs determined to require uplink beam tracking from among the neighboring BSs based on the measurement report, and transmitting information about a periodic random access channel of the MS to the determined beam tracking candidate BSs, receiving uplink beam tracking information from at least one of the one or more beam tracking candidates BSs, determining at least one beam tracking target BS from among the at least one beam tracking candidate BS transmitting the uplink beam tracking information, and transmitting uplink beam tracking information about the beam tracking target BS to the MS, transmitting information about transmission of an uplink beam training signal of the MS to the beam tracking target BS, and receiving information about a best MS transmission beam determined for the MS from the beam tracking target BS, and transmitting the information about the best MS transmission beam to the MS.

In another aspect of the present disclosure, a method for tracking an uplink beam in a beamforming-based cellular system includes receiving information about a periodic random access channel periodically transmitted by an MS from a serving BS of the MS by a neighboring BS, detecting a sequence of the periodic random access channel transmitted by the MS based on the information about the periodic random access channel, and transmitting uplink beam tracking information about the neighboring BS to the serving BS, receiving information about transmission of an uplink beam training signal of the MS from the serving BS, determining a best MS transmission beam for the MS by detecting the uplink beam training signal of the MS based on the information about the transmission of the uplink beam training signal, and transmitting information about the best MS transmission beam to the serving BS.

In another aspect of the present disclosure, an MS supporting tracking of an uplink beam in a beamforming-based cellular system includes a transceiver for transmitting, to a serving BS, a measurement report including signal qualities of the serving BS and neighboring BSs, receiving, from the serving BS, uplink beam tracking information about at least one beam tracking target BS, and transmitting an uplink beam training signal for the at least one beam tracking target BS based on the uplink beam tracking information, and a controller for receiving, from the serving BS, information about a best MS transmission beam of the beam tracking target BS, and storing the received information.

In another aspect of the present disclosure, a BS supporting tracking of an uplink beam in a beamforming-based cellular system includes a transceiver for receiving, from an MS, a measurement report including signal qualities of a serving BS and neighboring BSs, transmitting information about a periodic random access channel of the MS to one or more beam tracking candidate BSs, receiving uplink beam tracking information from at least one of the one or more beam tracking candidates BSs, transmitting uplink beam tracking information about a beam tracking target BS to the MS, transmitting information about transmission of an uplink beam training signal of the MS to the beam tracking target BS, receiving information about a best MS transmission beam determined for the MS from the beam tracking target BS, and transmitting the information about the best MS transmission beam to the MS, and a controller for determining the one or more beam tracking candidate BSs determined to require uplink beam tracking from among the neighboring BSs based on the measurement report, and determining at least one beam tracking target BS from among the at least one beam tracking candidate BS transmitting the uplink beam tracking information.

In another aspect of the present disclosure, a BS supporting tracking of an uplink beam in a beamforming-based cellular system includes a transceiver for receiving information about a periodic random access channel periodically transmitted by an MS from a serving BS of the MS, detecting a sequence of the periodic random access channel transmitted by the MS based on the information about the periodic random access channel, transmitting uplink beam tracking information about the neighboring BS to the serving BS, receiving information about transmission of an uplink beam training signal of the MS from the serving BS, and transmitting information about a best MS transmission beam for the MS to the serving BS, and a controller for determining the best MS transmission beam for the MS by detecting the uplink beam training signal of the MS based on the information about the transmission of the uplink beam training signal.

### Brief Description of the Drawings

FIG. 1 illustrates an exemplary beamforming-based cellular system to which the present disclosure is applied.
FIG. 2 illustrates a frame structure available in a beamforming-based cellular system according to an embodiment of the present disclosure.
FIG. 3 is a diagram illustrating a message flow for a procedure for tracking an uplink beam for a neighboring base station (BS) according to an embodiment of the present disclosure.
FIGS. 4a to 4i illustrate a flow of tracking an uplink beam for a neighboring BS according to an embodiment of the present disclosure.
FIG. 5 is a flowchart illustrating an operation of a mobile station (MS) according to an embodiment of the present disclosure.
FIG. 6 is a flowchart illustrating an operation of a serving BS according to an embodiment of the present disclosure.
FIG. 7 is a flowchart illustrating an operation of a neighboring BS according to an embodiment of the present disclosure.
FIG. 8 is a block diagram illustrating the structure of a BS according to an embodiment of the present disclosure.
FIG. 9 is a block diagram illustrating the structure of a BS transmitter modem according to an embodiment of the present disclosure.
FIG. 10 is a block diagram illustrating the structure of a BS receiver modem according to an embodiment of the present disclosure.
FIG. 11 is a block diagram illustrating the structure of a UE according to an embodiment of the present disclosure.
FIG. 12 is a block diagram illustrating the structure of a UE transmitter modem according to an embodiment of the present disclosure.
FIG. 13 is a block diagram illustrating the structure of a UE receiver modem according to an embodiment of the present disclosure.

### Mode for Carrying Out the Invention

Preferred embodiments of the present disclosure will be described in detail with reference to the attached drawings. A detailed description of known functions or constructions will be omitted lest it should obscure the subject matter of the present disclosure. Terms used herein are defined in consideration of functions according to the present disclosure and may be changed according to the intention of a user or an operator, or customs. Therefore, the definition should be made based on the comprehensive contents of the present disclosure.

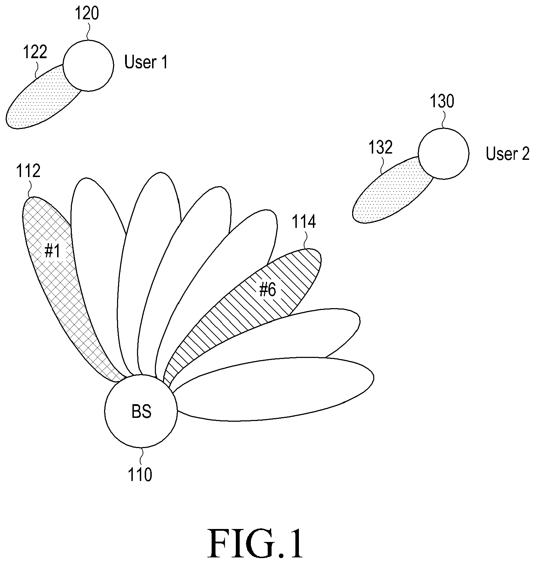

FIG. 1 illustrates an exemplary beamforming-based cellular system to which the present disclosure is applied.

Referring to FIG. 1, a base station (BS) 110 may serve mobile stations (MSs) 120 and 130 within a cell, using transmission antennas configured into an array antenna. The BS 110 forms beams for one or more scheduled MSs 120 and 130 by controlling a gain value for the direction (or channel) of each transmission antenna. In the illustrated example, MS #1 120 may be allocated beam #1 112 of the BS 110 and form a beam 122 steered toward the BS 110. That is, even though MS #1 120 is not on the line of sight from the BS 110 due to an obstacle, the BS 110 may provide MS #1 120 with a service with quality of service (QoS) required for MS #1 120 by beamforming. Similarly, MS #2 130 may be allocated to beam #6 114 of the BS 110 and form a beam 132 steered toward the BS 110. The BS 110 communicates with MS#2 130 using a pair of beams 114 and 132.

While not shown, BS-MS beam pairs for downlink (DL) directed from the BS 110 to the MSs 120 and 130 and MS-BS beam pairs for uplink (UL) directed from the MSs 120 and 130 to the BS 110 may be configured and formed independently.

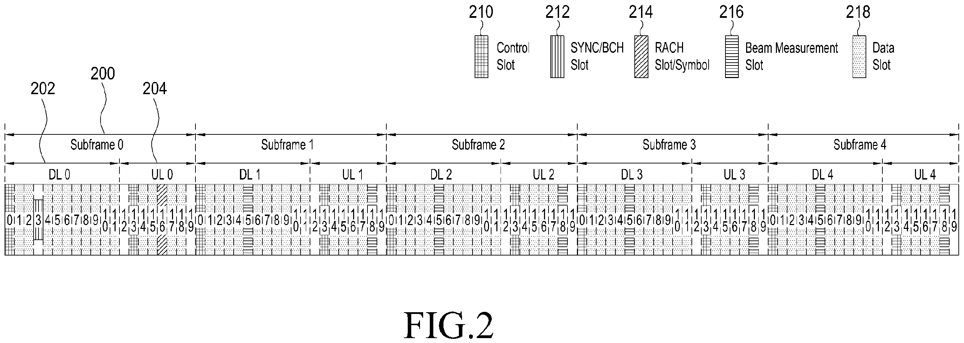

FIG. 2 illustrates a frame structure available in a beamforming-based cellular system according to an embodiment of the present disclosure.

Referring to FIG. 2, a radio frame is divided into a plurality of subframes 200. In a time division duplex (TDD) system, each subframe 200 is divided into a DL period 202 and a UL period 204. Each subframe 200 may be divided into 20 slots, and each slot may be allocated to a specific DL or UL channel.

A synchronous/broadcast channel (SYNC/BCH) slot 212 is disposed at a specific position of the first subframe in a radio frame, for use in DL synchronization and cell search of an MS. A control slot 210 delivers DL control information such as random access response (RAR) information defined during initial random access, or UL control information. A beam measurement (BM) slot 216 carries a DL/UL beam training signal for use in estimating the best DL beam pair (the best transmission beam of a BS and the best reception beam of an MS), a DL signal quality, and the like, or estimating the best UL beam pair (the best reception beam of the BS and the best transmission beam of the MS) and information needed for UL data transmission. A random access channel (RACH) slot 214 is used for acquisition of timing advance (TA) information for initial access of an MS and periodic UL timing synchronization after access of the MS. A data slot 218 carries DL data or UL data between a BS and an MS.

Because the SYNC/BCH slot 212 for initial access, the DL BM slot 216 for use in determining the best DL beam pair, and the DL control slot 210 including cell-common control information carry signals common to all MSs within the cell, the BS allocates a transmission beam on a symbol, slot, or frame basis, and transmits a signal by changing the beam in every allocation unit. Similarly to the BS, an MS allocates a transmission beam on a symbol, slot, or frame basis, and transmits a signal by changing the beam in every allocation unit, for the RACH slot 214 transmitted for initial access, the UL BM slot 216 for use in determining the best UL beam pair, and the UL control slot 210 carrying UL control information of the MS before the best UL beam pair is determined.

The DL SYNC/BCH slot 212 and the UL RACH slot 214 may carry a common signal that the MS should receive even before network access, and the DL BM and UL BM slots 216 may carry a dedicated signal used for the MS to estimate the best transmission and reception beams between the BS and the MS after the network access.

The MS may measure DL signal qualities using DL beam training signals transmitted by a serving BS and a neighboring BS, and determine whether to perform handover based on the measured DL signal qualities. If the signal quality measured from the serving BS by the MS is Ms and the signal quality measured from the neighboring BS by the MS is M_{T}, a handover condition may be represented as M_{T} > Ms + a where a represents a predetermined hysteresis. If the MS satisfies the handover condition, the MS performs handover.

The MS searches neighboring BSs for a target BS having the largest DL signal quality M_{T}, transmits a Handover Request message to the target BS through the serving BS, and receives a Handover Command message in response to the Handover Request message. Upon receipt of the Handover Command message, the MS discontinues data reception from the serving BS and attempts network entry to the target BS by transmitting an RACH signal in the RACH slot 214. In the beamforming-based cellular system, when the angle of departure of a transmission beam at an MS is equal to the angle of arrival of a reception beam at a BS, a transmitted/received signal has a largest signal strength. Therefore, if the MS fails to receive an RAR from the target BS after transmitting the RACH signal, the MS should retransmit the RACH signal by changing the transmission beam, and the target BS should receive the RACH signal by changing the reception beam.

Then, a maximum time taken for RACH transmission may be given using a combination of the number of MS beams and the number of BS beams, and Nb * Nb * 5ms at maximum may be taken for RACH transmission. In general, if the BS receives an RACH signal with a signal strength equal to or larger than a predetermined value, the BS determines that an RACH has been detected. Therefore, even though the MS receives a response (that is, an RAR) to the RACH, a UL beam pair used for the RAR reception is not always the best beam pair. In this context, the MS should determine the best UL beam between the BS and the MS by transmitting a UL beam training signal in a UL BM slot. Upon receipt of the RAR from the target BS, the MS discontinues RACH transmission and transmits a UL beam training signal in order to estimate the best UL beam. Like transmission of an RACH slot, transmission and reception of the UL beam training signal involves measuring the signal qualities of all beam pairs by changing an MS transmission beam and a BS reception beam, thereby causing a great time delay.

However, once handover is determined, the MS and the BS may not transmit and receive data until the best MS transmission/reception beam is determined through a UL BM slot after the MS transmits an RACH. Accordingly, the time delay involved in estimating the best UL beam interrupts communication between the BS and the MS.

In order to avoid the communication interruption, it is necessary to simplify the delay-incurring procedure of RACH transmission to UL beam decision. A time delay caused by beam switching may not be reduced physically in an analog beamforming system. Accordingly, an MS preliminarily determines a target BS as a handover candidate before handover decision, and tracks and determines a UL transmission beam for the target BS in embodiments of the present disclosure as described below. As the MS preliminarily determines a UL beam for the target BS as a handover candidate, the time taken for transmission of an RACH slot during handover may be minimized and the UL beam decision procedure may be omitted.

Now, a detailed description will be given below of embodiments of the present disclosure with reference to the attached drawings.

Beamforming is a technology of focusing waves in a specific direction toward a service area by means of a plurality of antennas. Beamforming includes transmission beamforming in which almost no signals are transmitted in any other direction than a predetermined direction, and reception beamforming in which almost no signals are received from any other direction than a predetermined direction. Therefore, it is most important in the beamforming technology to detect the best DL beam pair (the best transmission beam of a BS and the best reception beam of an MS) and the best UL beam pair (the best reception beam of the BS and the best transmission beam of the MS) from among a plurality of transmission and reception beam pairs between the BS and the MS.

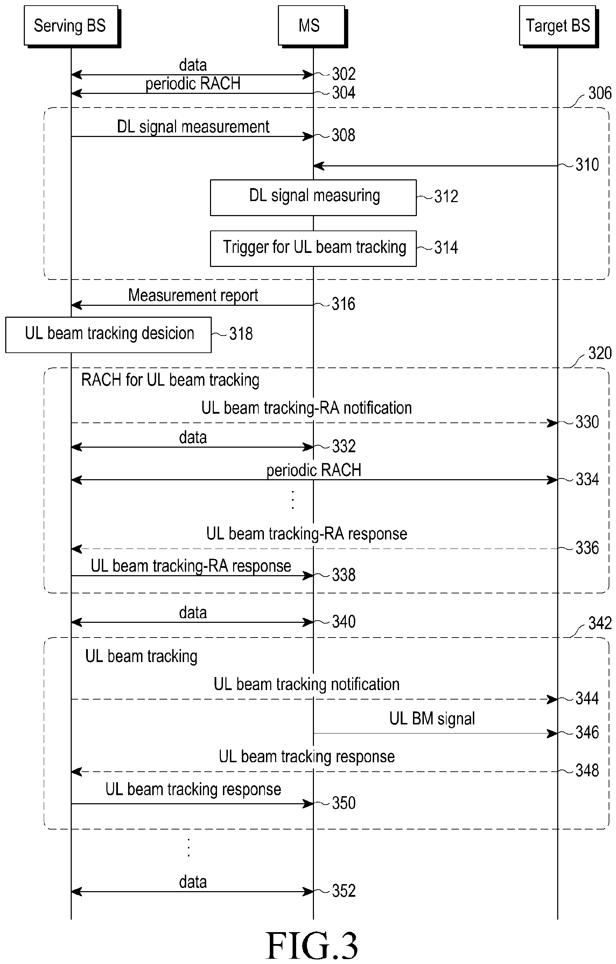

FIG. 3 is a diagram illustrating a message flow for a procedure for tracking a UL beam for a neighboring BS according to an embodiment of the present disclosure.

Referring to FIG. 3, an MS may be transmitting and receiving data to and from a serving BS in operation 302. The MS may transmit an RACH periodically during the data transmission and reception, as in operation 304.

Block 306 indicates a DL measurement procedure including operations 308 to 314.

In operation 308, the serving BS transmits a signal used for DL measurement (a reference signal, a pilot signal, a preamble signal, a beacon signal, or the like) in every predetermined period and/or resource. Likewise, a neighboring BS also transmits a signal used for DL measurement in operation 310. The signal used for DL measurement may be a signal carried in the afore-described DL BM slot. In operation 312, the MS performs DL signal measurement using signals transmitted in DL BM slots by the BSs. In another embodiment, the MS may measure the DL signal qualities of the serving BS and the neighboring BS using DL BM slots or DL SYNC/BCH slots.

The MS determines whether it is necessary to estimate and track a UL beam for the neighboring BS in operation 314. Specifically, the MS compares the signal quality measured from the neighboring BS with the signal quality measured from the serving BS. If the signal quality of the neighboring BS is larger than (the signal quality of the serving BS - b), the MS determines that UL beam tracking is needed for the neighboring BS (M_{T} > M_{S} - b where b represents a hysteresis for beam tracking). As the above UL beam tracking condition is used, unnecessary overhead of UL beam tracking for a neighboring BS may be prevented in an MS communicating with a serving BS on a very good channel. In operation 314, the MS may detect one or more neighboring BSs satisfying the UL beam tracking condition and perform the following operations with each of the detected neighboring BSs.

In operation 316, the MS reports the result of the DL signal measurement to the serving BS. The measurement report includes information about one or more neighboring BSs detected as satisfying the UL beam tracking condition in operation 314. Cell identifiers (IDs) of the one or more neighboring BSs may be reported in an ascending order of DL signal strengths. That is, the serving BS may determine the neighboring BSs in the order of larger DL signal strengths by decoding UL channels reported by the MS, starting from a most significant bit (MSB).

In operation 318, the serving BS determines UL beam tracking of the MS for neighboring BSs. Specifically, the serving BS selects one or more neighboring BSs for which the MS will perform UL beam tracking, based on a measurement report message including information (that is, the cell IDs) about the neighboring BSs arranged in the order of higher signal qualities. The serving BS may select one of the one or more neighboring BSs reported by the MS or at least a part of the one or more neighboring BSs reported by the MS, as candidate BSs for beam tracking.

Block 320 indicates a UL beam tracking procedure for a neighboring BS, including operations 330 to 338.

In operation 330, the serving BS transmits information about the ID of an RACH sequence periodically transmitted by the MS to the beam tracking candidate BSs selected in operation 318. That is, to receive TA information for UL synchronization from the serving BS, the MS communicating with the serving BS transmits the periodic RACH sequence at every predetermined interval. Since the periodic RACH is managed in a contention-free manner, a neighboring BS has no knowledge of the RACH sequence ID. However, the serving BS enables the beam tracking candidate BSs to detect the periodic RACH sequence transmitted by the MS by notifying them of the ID of the periodic RACH sequence transmitted by the MS. The serving BS and the MS may perform data transmission and reception and a periodic RACH procedure even during the UL beam tracking procedure for the neighboring BSs, as in operations 332 and 334. Having acquired the information (ID) about the periodic RACH sequence transmitted by the MS in the periodic RACH procedure, the beam tracking candidate BSs may detect the periodic RACH sequence transmitted by the MS.

In operation 336, each of the beam tracking candidate BSs detects the periodic RACH sequence of the MS and transmits a response message in relation to the detection of the periodic RACH sequence to the serving BS. The response message is an RAR for UL beam tracking and includes a cell ID identifying the BS transmitting the response message, TA information for UL synchronization, and at least one parameter to be used for the MS to transmit a UL beam training signal.

Even though the beam tracking candidate BS has detected the RACH sequence transmitted by the MS, the best beam to be used for data transmission and reception to and from the MS has not been decided yet. In general, if a BS receives an RACH sequence having a signal strength equal to or larger than a predetermined value, the BS determines that it has detected an RACH, and thus a UL beam pair with which the RACH may be received is available for transmission and reception of a UL control channel. However, it does not mean that the UL beam pair is also always available for data transmission and reception. Accordingly, the MS should transmit a UL beam training signal so that the beam tracking candidate BS may estimate the best beam for data transmission and reception. Since a UL beam training signal is a dedicated signal, each BS may manage UL beam training signals in a different manner. That is, since parameters used for transmission of a UL beam training signal may indicate a frequency band, time, or code index for transmission of the UL beam training signal, the parameters should be transmitted to the MS.

The serving BS selects one or more beam tracking target BSs best for the MS from among the BSs transmitting the response messages, in response to the response messages received in operation 336. In an embodiment, the serving BS may select a BS having the best signal quality reported by the MS, as a beam tracking target BS, from among the beam tracking candidate BSs that have transmitted the response messages.

In operation 338, the serving BS transmits the response message received from the beam tracking target BS to the MS. The response message includes at least one of the ID of the beam tracking target BS, TA information for UL synchronization, and parameters used for transmission of a UL beam training signal. The serving BS and the MS may continue data transmission and reception even during determination of the beam tracking target BS, as in operation 340.

Block 342 indicates a UL beam tracking procedure for a beam tracking target BS, including operations 344 to 350.

In operation 344, the serving BS transmits information about the UL beam training signal of the MS to the beam tracking target BS. The MS transmits the UL beam training signal in a UL BM slot based on the information about the UL beam training signal in operation 346. The information about the UL beam training signal may include information about a time (that is, a slot position) at which the UL beam training signal is transmitted.

If the MS has sufficient transmission power, the MS may multiplex UL beam training signals for the serving BS and the beam tracking target BS and transmit the multiplexed UL beam training signals in a UL BM slot. The multiplexing may be frequency division multiplexing, time division multiplexing, or code division multiplexing. However, because the transmission power of the MS is limited in a real communication environment, UL BM slots for the serving BS and the beam tracking target BS may be distinguished from each other. In an embodiment, the MS may transmit the UL beam training signal for the serving BS in a UL BM slot of an even-numbered subframe, whereas the MS may transmit the UL beam training signal for the beam tracking target BS in a UL BM slot of an odd-numbered subframe. Only a predetermined BS may successfully receive a dedicated UL beam training signal to which a TA is applied, and estimate the best UL beam pair from the dedicated UL beam training signal.

In operation 348, the beam training target BS estimates the best transmission and reception beams for the MS based on a measurement result of the UL beam training signal, and transmits information about the beam pair. In an embodiment, the beam tracking target BS may transmit only information about the estimated best UL transmission beam for the MS to the serving BS.

In operation 350, the serving BS transmits the information about the best UL transmission beam for the MS received from the beam tracking target BS to the MS. The MS may acquire the information about the best UL transmission beam for the beam tracking target BS without interruptions of communication with the serving BS by the above procedure. Subsequently, the serving BS and the MS may continue data transmission and reception until handover is determined, as in operation 352.

The MS manages the information about the best UL transmission beam for the beam tracking target BS. The MS may manage the best UL transmission beams for one or more beam tracking target BSs. If one of the managed one or more beam tracking target BSs becomes a handover target BS, the MS may transmit a handover-related signal to the handover target BS based on information about the best UL transmission beam for the handover target BS.

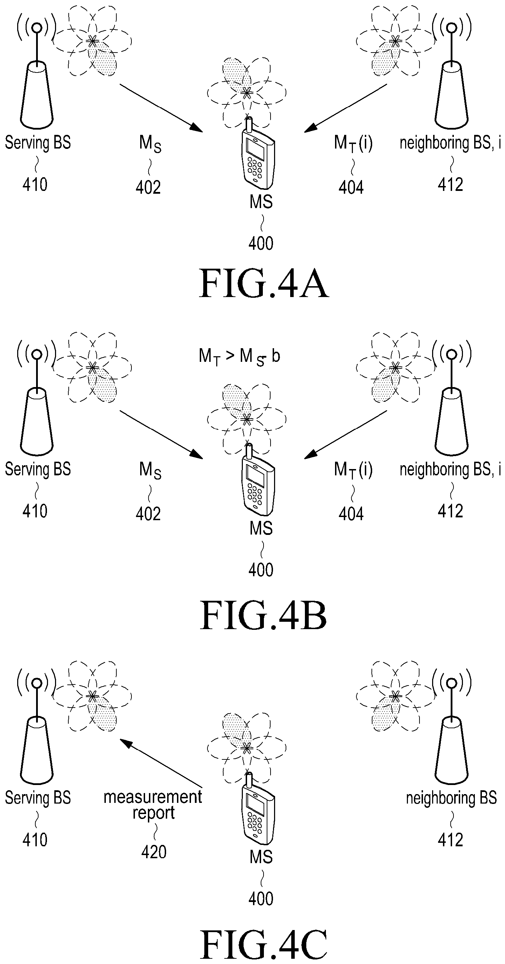

FIGS. 4a to 4i illustrate a UL beam tracking flow for a neighboring BS according to an embodiment of the present disclosure.

Referring to FIG. 4a, an MS 400 measures a signal quality Ms 402 of a DL signal received from a serving BS 410 and a signal quality M_{T} 404 of a DL signal received from a neighboring BS 412. In the illustrated example, the neighboring BS 412 is neighboring BS i and the signal quality measured from neighboring BS i is M_{T}(i).

Referring to FIG. 4b, the MS 400 determines whether UL beam tracking is needed for the neighboring BS 412. That is, the MS determines that UL beam tracking is needed for neighboring BS i 412 satisfying a UL beam tracking condition M_{T}(i) > M_{S} - b. The hysteresis b for beam tracking may be predetermined or signaled by the serving BS.

Referring to FIG. 4c, the MS 400 transmits, to the serving BS 410, a measurement report 420 including identification information and/or signal quality information about at least one neighboring BS 412 satisfying the condition. The measurement report 420 may include the cell IDs of one or more neighboring BS 412 satisfying the condition in the order of higher signal qualities. Then the serving BS 410 determines one or more neighboring BSs 412 having higher signal qualities based on the measurement report 20 to be beam tracking candidate BSs.

In another embodiment, the MS 400 may transmit the signal qualities of all (or a predetermined number of) detected neighboring BSs in a measurement report to the serving BS 410, without considering the condition, and the serving BS 410 may determine one or more neighboring BSs 412 having signal qualities equal to or higher than a predetermined threshold to be beam tracking candidate BSs.

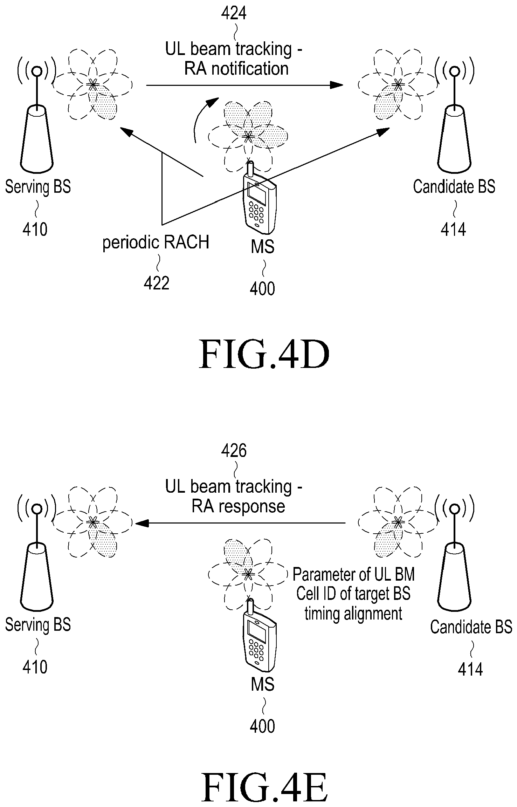

Referring to FIG. 4d, the serving BS 410 transmits, to a beam tracking candidate BS 414, a UL beam tracking-RA notification message 424 including information about the sequence ID of a periodic RACH transmitted periodically by the MS 400. The MS 400 transmits the sequence of the periodic RACH by changing a transmission beam in every transmission period of the periodic RACH. The beam tracking candidate BS 414 may detect the sequence of the periodic RACH transmitted by the MS 400 based on the information included in the UL beam tracking-RA notification message 424.

Referring to FIG. 4e, the beam tracking candidate BS 414 detects the sequence of the periodic RACH transmitted by the MS 400, and transmits a UL beam tracking-RA response message 426 indicating the detection of the sequence of the periodic RACH to the serving BS 410. The UL beam tracking-RA response message 426 includes TA information about the beam tracking candidate BS 414 and at least one UL BM parameter for transmission of a UL beam training signal. The at least one UL BM parameter indicates, for example, a sequence ID for code division of a UL beam training signal or frequency/time resources for transmission of the UL beam training signal. The serving BS 410 selects one or more beam tracking target BSs from among the one or more beam tracking candidate BSs 414 that have transmitted the UL beam tracking-RA response message 426. In an embodiment, the serving BS 410 may select at least one neighboring BS having the best signal quality based on signal qualities reported by the measurement report illustrated in FIG. 4c, as a beam tracking target BS.

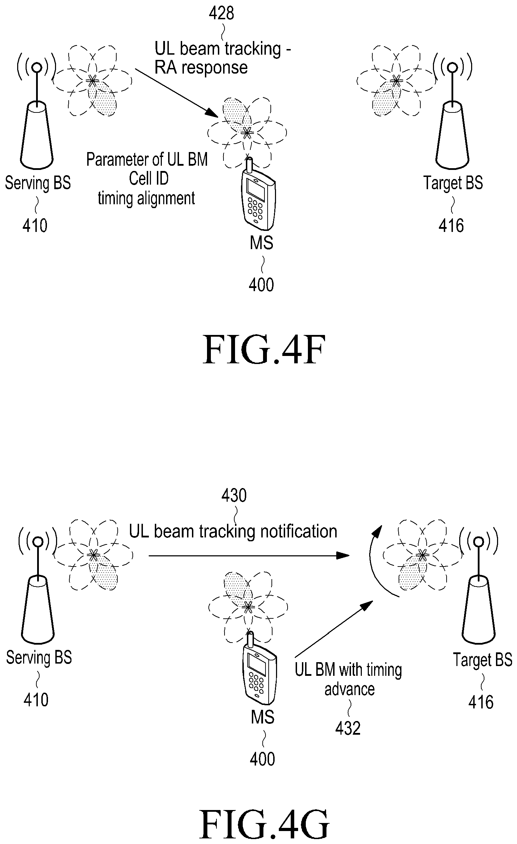

Referring to FIG. 4f, the serving BS 410 transmits, to the MS 400, a UL beam tracking-RA response message 428 including the cell ID of the beam tracking target BS 416, parameters for transmission of a UL beam training signal, and TA information.

Referring to FIG. 4g, the serving BS 410 transmits, to the beam tracking target BS 416, a UL beam tracking notification message 430 including information about the timing of a UL BM slot carrying a UL beam training signal from the MS 400. The MS 400 may multiplex UL beam training signals for the serving BS 410 and the beam tracking target BS 416 in one UL BM slot and transmit the multiplexed UL beam training signals. Or the MS 400 may transmit the UL beam training signals for the serving BS 410 and the beam tracking target BS 416 in different UL BM slots. The UL beam training signal for each of the BSs 410 and 416 is transmitted at an advanced timing according to TA information about the BS. The beam tracking target BS 416 may estimate the best BS reception beam and the best MS transmission beam using the beam training signal received from the MS 400.

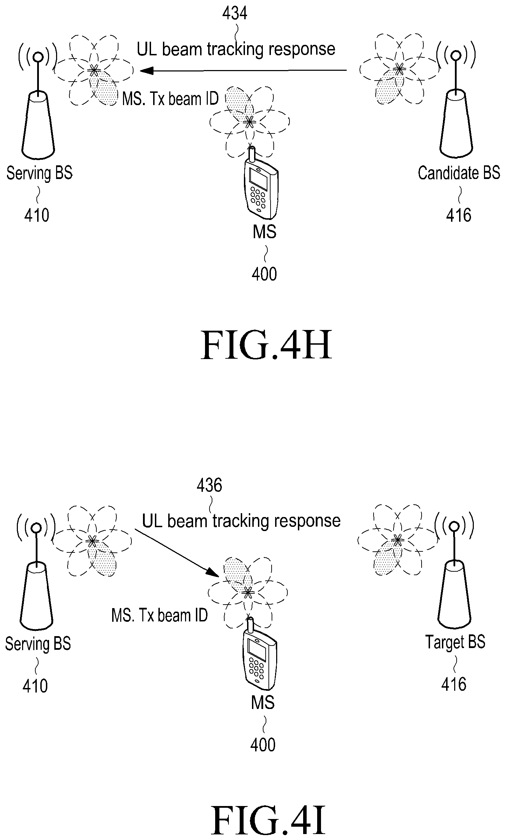

Referring to FIG. 4h, the beam tracking target BS 416 reports information about the MS transmission beam determined for the MS 400 to the serving BS 410 by a UL beam tracking response message 434.

Referring to FIG. 4i, the serving BS 410 transmits a UL beam tracking response message 436 including information about the best transmission beam for the MS 400, estimated by the beam tracking target BS 416, to the MS 400. The information may be transmitted along with a cell ID being identification information about the beam tracking target BS 416 to the MS 400. The MS 400 manages the best transmission beam for the beam tracking target BS 416, for use in handover that may be performed later.

As described above, the MS 400 periodically transmits a UL beam training signal to each beam tracking target BS satisfying the UL beam tracking condition of FIG. 4b, and receives a response indicating the best MS transmission beam of the beam tracking target BS through the serving BS 410.

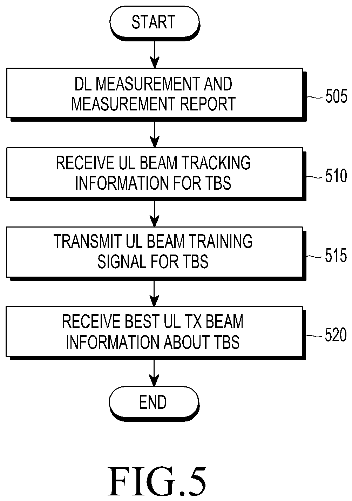

FIG. 5 is a flowchart illustrating an operation of an MS according to an embodiment of the present disclosure.

Referring to FIG. 5, the MS measures signal qualities of a serving BS and neighboring BSs based on DL signals received from the BSs, and transmits a measurement report including the measured signal qualities to the serving BS. Herein, the MS may report only information about signal qualities satisfying a predetermined condition in the measurement report. The predetermined condition is, for example, M_{T}(i) > M_{S} - b.

In operation 510, the MS receives UL beam tracking information for at least one beam tracking target BS from the serving BS. The UL beam tracking information for the beam tracking target BS may include at least one of the cell ID of the beam tracking target BS, a parameter used for transmission of a UL beam training signal, and TA information.

In operation 515, the MS transmits a UL beam training signal for the beam tracking target BS based on the UL beam tracking information. In operation 520, the MS receives information about the best MS transmission beam of the beam tracking target BS from the serving BS.

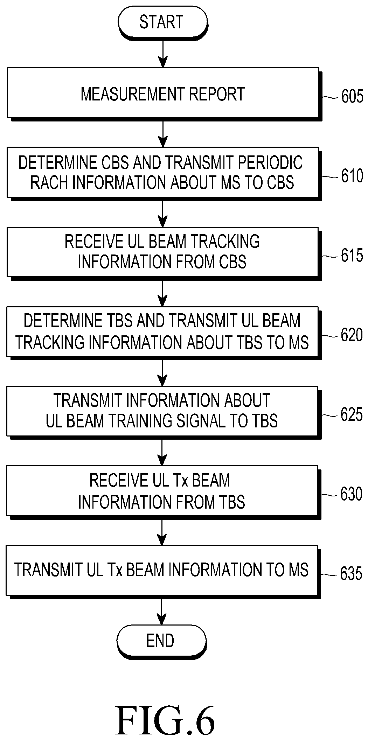

FIG. 6 is a flowchart illustrating an operation of a serving BS according to an embodiment of the present disclosure.

Referring to FIG. 6, the serving BS receives, from an MS, a measurement report including signal qualities of neighboring BSs, or neighboring BSs determined to require UL beam transmission in operation 605. In operation 610, the serving BS determines one or more beam tracking candidate BSs from among the neighboring BSs reported by the measurement report, and transmits periodic RACH information about the MS to the determined beam tracking candidate BSs. The periodic RACH information means the ID of an RACH sequence transmitted periodically by the MS.

In operation 615, the serving BS receives TA information needed for transmission of a UL beam training signal and a UL BM parameter from at least a part of the determined one or more beam tracking candidate BSs. In operation 620, the serving BS determines at least one beam tracking target BS from among the one or more beam tracking candidate BSs that have transmitted the UL BM parameters, and transmits TA information and a UL BM parameter related to the beam tracking target BS to the MS.

In operation 625, the serving BS transmits information about transmission of a UL beam training signal from the MS to the beam tracking target BS. The information about the transmission of the UL beam training signal means information about the timing of a UL BM slot in which the MS transmits the UL beam training signal. The serving BS receives information about the best MS transmission beam for the MS, determined by the beam tracking target BS in operation 630 and transmits the information about the best MS transmission beam to the MS in operation 635.

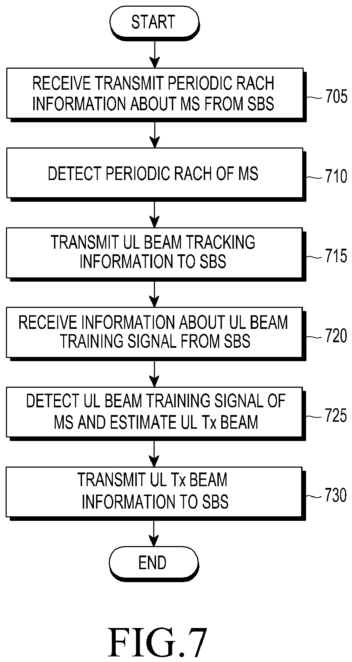

FIG. 7 is a flowchart illustrating an operation of a neighboring BS according to an embodiment of the present disclosure.

Referring to FIG. 7, the neighboring BS receives, from a serving BS of an MS, information about a periodic RACH sequence transmitted periodically by the MS in operation 705. The neighboring BS detects the periodic RACH sequence transmitted by the MS based on the information in operation 710, and transmits TA information about the neighboring BS and a parameter used for transmission of a UL training signal to the serving BS in operation 715.

The neighboring BS receives information about a timing at which the MS transmits a UL beam training signal from the serving BS in operation 720, and determines the best MS transmission beam for the MS by detecting the UL beam training signal of the MS based on the timing information in operation 725. In operation 730, the neighboring BS transmits information about the best MS transmission beam to the serving BS so that when the MS performs handover to the neighboring BS, the MS may use the information.

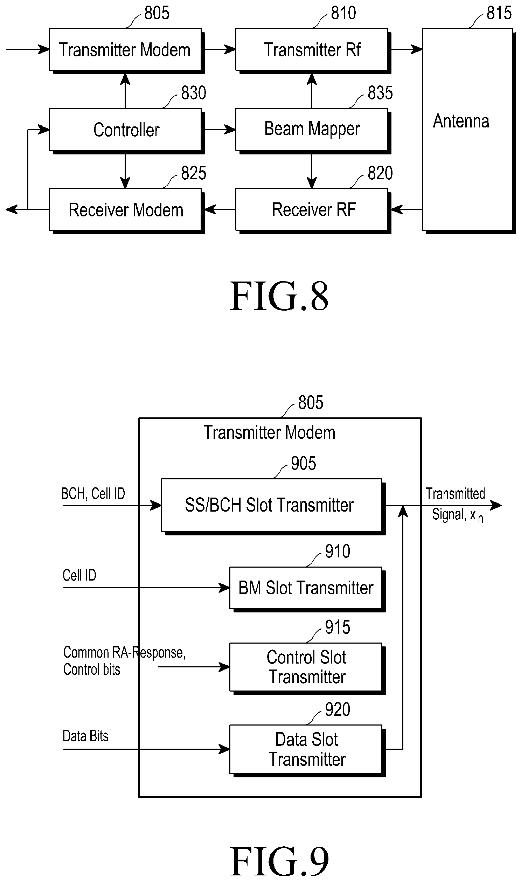

FIG. 8 is a block diagram illustrating the structure of a BS according to an embodiment of the present disclosure.

Referring to FIG. 8, a transmitter modem 805 generates signals to be transmitted in control and data slots. The generated signals are transmitted through a transmitter radio frequency (RF) unit 810 and then an antenna 815. A signal received through the antenna 815 is transmitted to a receiver modem 825 through a receiver RF unit 820. A controller 830 determines whether to generate a signal for a control slot or a data slot, determines a transmission signal and beam using information estimated by the receiver modem 825, and transmits beam information to a beam mapper 835. The beam mapper 835 controls the transmitter RF unit 810 and the receiver RF unit 820 to generate beams suitable for a transmission signal and a reception signal using the beam information received through the controller 830.

FIG. 9 is a block diagram illustrating the structure of the transmitter modem 805 of the BS according to an embodiment of the present disclosure.

Referring to FIG. 9, an SS/BCH slot transmitter 905 generates an SS/BCH signal based on a BCH ID and a cell ID, for DL synchronization of an MS. A BM slot transmitter 910 generates a DL BM signal based on the cell ID so that the MS may estimate a DL beam pair and measure a signal quality. A control slot transmitter 915 generates an RAR message in response to detection of a periodic RACH sequence, or a control signal including control bits. A data slot transmitter 920 generates a data signal including data bits. The generated signals are radiated in the air through the transmitter RF unit 810 and the antenna 815.

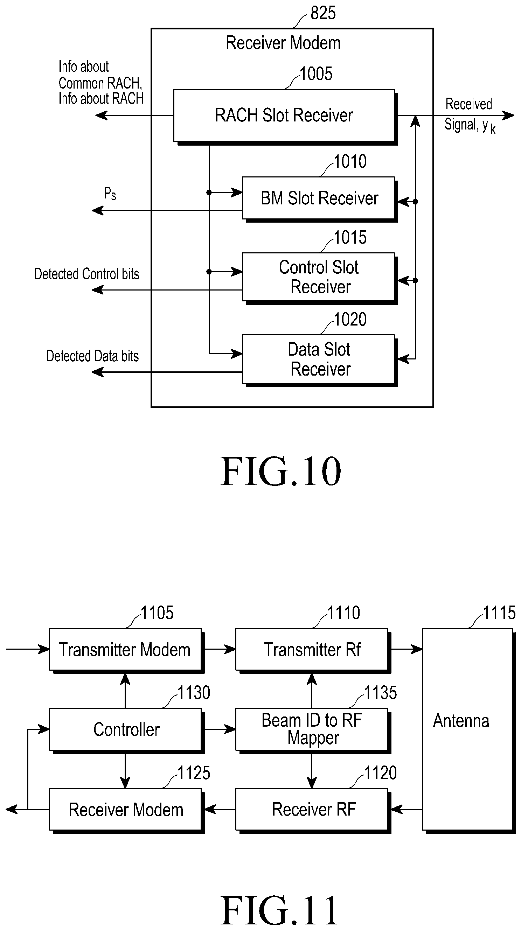

FIG. 10 is a block diagram illustrating the structure of the receiver modem 825 of the BS according to an embodiment of the present disclosure.

Referring to FIG. 10, an RACH slot receiver 1005 detects an initial RACH for initial BS entry of an MS and a periodic RACH of the MS. A BM slot receiver 1010 detects a UL BM slot signal from a received signal, for estimating a UL beam pair and measuring a signal quality of the MS. A control slot receiver 1015 detects a control slot signal transmitted by the MS from the received signal, and a data slot receiver 1020 detects a data slot signal transmitted by the MS from the received signal.

FIG. 11 is a block diagram illustrating the structure of an MS according to an embodiment of the present disclosure.

Referring to FIG. 11, a transmitter modem 1105 generates signals to be transmitted in control and data slots. The generated signals are transmitted through a transmitter RF unit 1110 and then an antenna 1115. A signal received through the antenna 1115 is transmitted to a receiver modem 1125 through a receiver RF unit 1120. A controller 1130 determines whether to generate a signal for a control slot or a data slot in the transmitter modem 1105, determines a transmission signal and beam using information estimated by the receiver modem 1125, and transmits beam information to a beam mapper 1135. The beam mapper 1135 controls the transmitter RF unit 1110 and the receiver RF unit 1120 to generate beams suitable for a transmission signal and a reception signal using the beam information received through the controller 1130.

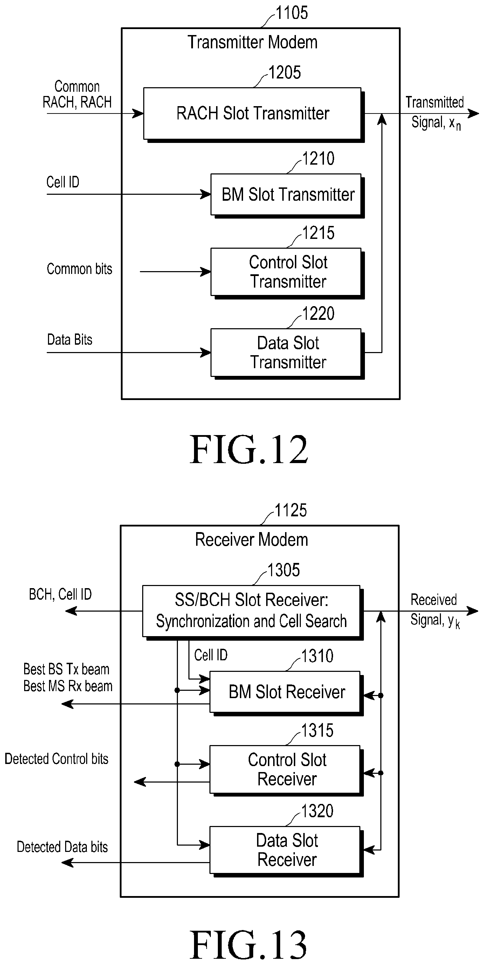

FIG. 12 is a block diagram illustrating the structure of the transmitter modem 1105 of the MS according to an embodiment of the present disclosure.

Referring to FIG. 12, an RACH slot transmitter 1205 generates an initial RACH for initial BS entry of the MS and a periodic RACH of the MS. A BM slot transmitter 1210 generates a UL BM slot signal for estimation of a UL beam pair and link quality measurement between the MS and the BS, based on a cell ID. A control slot transmitter 1215 generates a control slot signal, and a data slot transmitter 1220 transmits UL data of the MS. The generated signals are radiated in the air through the transmitter RF unit 1110 and the antenna 1115.

FIG. 13 is a block diagram illustrating the structure of the receiver modem 1125 of the MS according to an embodiment of the present disclosure.

Referring to FIG. 13, an SS/BCH slot receiver 1305 detects an SS/BCH signal from a received signal, for DL synchronization and cell search. A BM slot receiver 1310 detects a DL BM slot signal from the received signal, measures a DL beam pair and a signal quality, and determines the best BS transmission beam and the best MS reception beam. A control slot receiver 1315 detects control information from the received signal, and a data slot receiver 1320 detects data transmitted by the BS from the received signal.

While the disclosure has been shown and described with reference to certain embodiments thereof, it will be understood by those skilled in the art that various changes in form and details may be made therein without departing from the spirit and scope of the disclosure as defined by the appended claims and their equivalents.

## Claims

1. A method for tracking an uplink beam in a beamforming-based cellular system, the method comprising:
transmitting, to a serving base station (BS), a measurement report including signal qualities of the serving BS and neighboring BSs;
receiving, from the serving BS, uplink beam tracking information about at least one beam tracking target BS;
transmitting an uplink beam training signal for the at least one beam tracking target BS based on the uplink beam tracking information; and
receiving, from the serving BS, information about a best mobile station (MS) transmission beam of the beam tracking target BS, and storing the received information.

2. The method according to claim 1, wherein the measurement report includes information about signal qualities of one or more neighboring BSs satisfying an uplink beam estimation condition.

3. The method according to claim 1, wherein the measurement report includes information about signal qualities of one or more neighboring BSs satisfying an uplink beam estimation condition in an ascending order.

4. The method according to claim 1, wherein the uplink beam tracking information includes timing advance information about each beam tracking target BS, and information about a code, frequency resources, or time resources used for transmission of the uplink beam training signal.

5. The method according to claim 1, wherein each of the at least one beam tracking target BS detects a periodic random access channel sequence of the MS, and is selected from among one or more neighboring BSs transmitting a random access response to the serving BS.

6. The method according to claim 1, wherein the transmission of an uplink beam training signal comprises multiplexing an uplink beam training signal for the beam tracking target BS and an uplink beam training signal for the serving BS, and transmits the multiplexed uplink beam training signals in one slot or independent slots.

7. A method for tracking an uplink beam in a beamforming-based cellular system, the method comprising:
receiving, from a mobile station (MS), a measurement report including signal qualities of a serving base station (BS) and neighboring BSs;
determining one or more beam tracking candidate BSs determined to require uplink beam tracking from among the neighboring BSs based on the measurement report, and transmitting information about a periodic random access channel of the MS to the determined beam tracking candidate BSs;
receiving uplink beam tracking information from at least one of the one or more beam tracking candidates BSs;
determining at least one beam tracking target BS from among the at least one beam tracking candidate BS transmitting the uplink beam tracking information, and transmitting uplink beam tracking information about the beam tracking target BS to the MS;
transmitting information about transmission of an uplink beam training signal of the MS to the beam tracking target BS; and
receiving information about a best MS transmission beam determined for the MS from the beam tracking target BS, and transmitting the information about the best MS transmission beam to the MS.

8. The method according to claim 7, wherein the measurement report includes information about signal qualities of one or more neighboring BSs satisfying an uplink beam estimation condition.

9. The method according to claim 7, wherein the measurement report includes information about signal qualities of one or more neighboring BSs satisfying an uplink beam estimation condition in an ascending order.

10. The method according to claim 7, wherein the uplink beam tracking information includes timing advance information about each beam tracking candidate BS, and information about a code, frequency resources, or time resources used for transmission of the uplink beam training signal.

11. The method according to claim 7, wherein at least one beam tracking candidate BS having a highest signal quality is determined to be the beam tracking target BS based on information about the signal qualities included in the measurement report.

12. The method according to claim 7, wherein the information about the transmission of the uplink beam training signal includes information about a timing of an uplink slot carrying the uplink beam training signal from the MS.

13. A method for tracking an uplink beam in a beamforming-based cellular system, the method comprising:
receiving information about a periodic random access channel periodically transmitted by a mobile station (MS) from a serving base station (BS) of the MS by a neighboring BS;
detecting a sequence of the periodic random access channel transmitted by the MS based on the information about the periodic random access channel, and transmitting uplink beam tracking information about the neighboring BS to the serving BS;
receiving information about transmission of an uplink beam training signal of the MS from the serving BS;
determining a best MS transmission beam for the MS by detecting the uplink beam training signal of the MS based on the information about the transmission of the uplink beam training signal; and
transmitting information about the best MS transmission beam to the serving BS.

14. The method according to claim 13, wherein the uplink beam tracking information includes timing advance information about the neighboring BS, and information about a code, frequency resources, or time resources used for the transmission of the uplink beam training signal.

15. The method according to claim 13, wherein the information about the transmission of the uplink beam training signal includes information about a timing of an uplink slot carrying the uplink beam training signal from the MS.

16. A mobile station (MS) supporting tracking of an uplink beam in a beamforming-based cellular system, the MS comprising:
a transceiver for transmitting, to a serving base station (BS), a measurement report including signal qualities of the serving BS and neighboring BSs, receiving, from the serving BS, uplink beam tracking information about at least one beam tracking target BS, and transmitting an uplink beam training signal for the at least one beam tracking target BS based on the uplink beam tracking information; and
a controller for receiving, from the serving BS, information about a best MS transmission beam of the beam tracking target BS, and storing the received information.

17. A base station (BS) supporting tracking of an uplink beam in a beamforming-based cellular system, the BS comprising:
a transceiver for receiving, from a mobile station (MS), a measurement report including signal qualities of a serving BS and neighboring BSs, transmitting information about a periodic random access channel of the MS to one or more beam tracking candidate BSs, receiving uplink beam tracking information from at least one of the one or more beam tracking candidates BSs, transmitting uplink beam tracking information about a beam tracking target BS to the MS, transmitting information about transmission of an uplink beam training signal of the MS to the beam tracking target BS, receiving information about a best MS transmission beam determined for the MS from the beam tracking target BS, and transmitting the information about the best MS transmission beam to the MS; and
a controller for determining the one or more beam tracking candidate BSs determined to require uplink beam tracking from among the neighboring BSs based on the measurement report, and determining at least one beam tracking target BS from among the at least one beam tracking candidate BS transmitting the uplink beam tracking information.

18. A base station (BS) supporting tracking of an uplink beam in a beamforming-based cellular system, the BS comprising:
a transceiver for receiving information about a periodic random access channel periodically transmitted by a mobile station (MS) from a serving BS of the MS, detecting a sequence of the periodic random access channel transmitted by the MS based on the information about the periodic random access channel, transmitting uplink beam tracking information about the neighboring BS to the serving BS, receiving information about transmission of an uplink beam training signal of the MS from the serving BS, and transmitting information about a best MS transmission beam for the MS to the serving BS; and
a controller for determining the best MS transmission beam for the MS by detecting the uplink beam training signal of the MS based on the information about the transmission of the uplink beam training signal.
